# EUROPEAN PATENT APPLICATION

(11) **EP 4 604 633 A1**
(43) Date of publication of application: **20.08.2025**
(21) Application number: 25157085.9
(22) Date of filing: 11.02.2025
(51) Int. Cl.: H04W 56/00

(54) **APPARATUS, AND A METHOD, FOR DETERMINING POSITION OF A DEVICE**

(30) Priority: 14.02.2024 GB 202402013
(71) Applicant: Nokia Technologies Oy, 02610 Espoo (FI)
(72) Inventor: BARBU, Oana-Elena, 9220 Aalborg (DK); KIILERICH PRATAS, Nuno Manuel, 9220 Aalborg (DK); VEJLGAARD, Benny, 9260 Gistrup (DK); HARREBEK, Johannes, 9000 Aalborg (DK); SVENDSEN, Simon, 9000 Aalborg (DK)
(74) Representative: Whiting, Gary

(57) **Abstract**

There is herein disclosed a first user equipment comprising means for identifying that the first UE is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device. The first user equipment further comprises means for identifying a second UE that is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device. The first user equipment further comprises means for establishing a sidelink connection between the first UE and the second UE, means for identifying that the first UE has been selected to provide a synchronization signal for synchronizing the first UE and the second UE and means for transmitting, in response to identifying that the first UE has been selected to provide a synchronization signal for synchronizing the first UE and the second UE, the synchronization signal to the second UE via the sidelink connection.

## Description

### Field

Various example embodiments relate to an apparatus for determining a position of a device. Further embodiments relate to a method of operating related to such apparatus.

### Background

In the context of at least some conventional communication networks, one important aspect is sustainability, which e.g., includes zero-energy communications. This term refers to terminal devices, e.g., ambient Internet of Things IoT devices, which operate without batteries, but which may e.g., have energy harvesting capabilities (e.g., energy stored in a capacitor) or devices without batteries and no capability of storing energy.

There is herein disclosed an ambient IOT localization, in other words position determination, method which utilizes time difference of arrival (TDOA) techniques for ambient IOT systems.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described a first user equipment, UE, comprising means for identifying that the first UE is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device; means for identifying a second UE that is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device; means for establishing a sidelink connection between the first UE and the second UE; means for identifying that the first UE has been selected to provide a synchronization signal for synchronizing the first UE and the second UE; and means for transmitting, in response to identifying that the first UE has been selected to provide a synchronization signal for synchronizing the first UE and the second UE, the synchronization signal to the second UE via the sidelink connection.

The means for identifying that the first UE has been selected to provide the synchronization signal may include means for receiving from a location management function, LMF, an indication that the first UE is to provide the synchronization signal.

The means for identifying that the first UE has been selected to provide the synchronization signal may include means for receiving an indication, from the second UE, that the first UE has been selected as a primary reference device in the sidelink connection and that the second UE has been selected as a secondary reference device in the sidelink connection.

According to a second aspect, there is described a first user equipment, UE, comprising means for identifying that the first UE is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device; means for identifying a second UE that is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device; means for establishing a sidelink connection between the first UE and the second UE; and means for receiving a synchronization signal from the second UE via the sidelink connection, wherein the synchronization signal is for synchronizing the first UE and the second UE.

The first UE may further comprise means for determining whether the first UE and the second UE are associated with the same network node; means for determining whether the first UE and/or second UE are connected to the network node; and means for, upon determining that the first UE and second UE are not associated with the same network node or that at least one of the first UE and second UE are not connected to the network node, establishing the sidelink connection between the first UE and the second UE to synchronize the first UE and the second UE.

The first UE or second UE may comprise an activator suitable for activating the AIoT device or a reader suitable for receiving at least one signal from an activated AIoT device.

The first UE may be an activator among a plurality of activators, each of the plurality being configured to send an indication of its respective availability for activating the AIoT device. A primary activator may be selected from the plurality of activators based on the indications. The primary activator may denote the first activator that will try to activate the AIoT device. The plurality of activators may be informed of the selected primary activator.

The first UE may be selected to be the primary activator.

The first UE may be an activator among a plurality of activators, each activator of the plurality having a unique activation signal configuration. The respective unique activation configurations are configured to be transmitted by the activators to activate the AIoT device.

The synchronization signal may comprise a time, T₀, for use by the first UE and the second UE. T₀ is a time for commencing a time difference of arrival localization session to locate the AIoT device.

The means may comprise at least one processor; and at least one memory storing instructions that, when executed by the at least once processor, cause the performance of the apparatus.

According to a third aspect, there is described a method comprising identifying that a first user equipment, UE, is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device; identifying a second UE that is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device; establishing a sidelink connection between the first UE and the second UE; identifying that the first UE has been selected to provide a synchronization signal for synchronizing the first UE and the second UE; and transmitting, in response to identifying that the first UE has been selected to provide a synchronization signal for synchronizing the first UE and the second UE, the synchronization signal to the second UE via the sidelink connection.

According to a fourth aspect, there is described a method comprising identifying that a first user equipment, UE, is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device; identifying a second UE that is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device; establishing a sidelink connection between the first UE and the second UE; and receiving a synchronization signal from the second UE via the sidelink connection, wherein the synchronization signal is for synchronizing the first UE and the second UE.

According to a fifth aspect, there is described an apparatus comprising: means for identifying a plurality of activators, wherein the plurality of activators are for activating an ambient internet of things, AIoT, device; means for receiving from each of the plurality of activators an indication of each activators availability for activating the AIoT device; means for selecting at least one primary activator from the plurality of activators, based on the indication of each activators availability for activating the AIoT device, wherein the at least one primary activator denotes the first activator that will try to activate the AIoT device; and means for informing the plurality of activators of the at least one selected primary activator.

The indication of each activators availability for activating the AIoT device may comprise at least one of the following: an indication of an activator's current involvement in radio traffic; whether an activator is in radio resource control, RRC, connected state or RRC inactive state; whether an activator is immediately available for activating the AIoT device.

The apparatus may further comprise means for ranking the plurality of activators to establish a hierarchical list based on the indication of each activators availability for activating the AIoT device. The apparatus may further comprise means for informing the plurality of activators of the hierarchical list.

The means for selecting the at least one primary activator from the plurality of activators may comprise selecting at least one activator from the hierarchical list.

The means for ranking the plurality of activators to establish a hierarchical list may comprise allocating each activator of the plurality of activators into at least one priority group. The at least one priority group may comprise: a low priority group for any activators that are currently involved in radio traffic; a medium priority group for any activators that are radio resource control, RRC, inactive state; a high priority group for any activators that are immediately available for activating the AIoT device.

The means for selecting the at least one primary activator from the plurality of activators may comprise means for selecting an activator in the high priority group.

The means for informing the plurality of activators of the at least one selected primary activator may comprise means for informing the plurality of activators of the activators allocated to the at least one priority group.

The apparatus may further comprise means for selecting a standby activator based on the indication of each activators availability for activating the AIoT device, wherein the standby activator denotes the second activator that will try to activate the AIoT device if the primary activator is not successful at activating the AIoT device; and means for informing the plurality of activators of the selected standby activator.

The apparatus may further comprise means for determining, or receiving an indication of, a synchronization manager, wherein the synchronization manager defines a start time, T₀, for commencing a time difference of arrival localization session to locate the AIoT device.

The apparatus may further comprise means for determining the start time, T₀; or means for receiving an indication of the start time, T₀, from the synchronization manager.

The apparatus may comprise an activator of the plurality of activators.

The apparatus may comprise a location management function, LMF, suitable for performing a time difference of arrival localization session to locate the AIoT device.

The means for receiving from each of the plurality of activators an indication of each activators availability for activating the AIoT device, may comprise means for receiving a positioning protocol information element, IE, capability report from each activator. The means for informing the plurality of activators of the at least one selected primary activator, may comprise means for distributing the at least one selected primary activator via at least one additional information element.

The apparatus may further comprise means for determining an identity of the AIoT device that requires localizing; and means for selecting the plurality of activators suitable for activating the AIoT device, based on the identity of the AIoT device that requires localizing.

The apparatus may further comprise means for determining an activation signal for activating the AIoT device, wherein the same activation signal is determined regardless of the activator selected from the plurality of activators; and means for informing the plurality of activators of the activation signal.

According to a sixth aspect, there is described a method comprising identifying a plurality of activators, wherein the plurality of activators are for activating an ambient internet of things, AIoT, device; receiving from each of the plurality of activators an indication of each activators availability for activating the AIoT device; selecting at least one primary activator from the plurality of activators, based on the indication of each activators availability for activating the AIoT device, wherein the at least one primary activator denotes the first activator that will try to activate the AIoT device; and informing the plurality of activators of the at least one selected primary activator.

According to a seventh aspect, there is described an apparatus comprising means for identifying a plurality of activators, wherein the plurality of activators are for activating an ambient internet of things, AIoT, device; means for identifying a unique activation signal for each of the plurality of activators; means for transmitting to each of the plurality of activators a configuration for their respective unique activation signal. The respective unique activation signal are configured to be transmitted by the activators to activate the AIoT device.

The apparatus may comprise a location management function, LMF, suitable for performing a time difference of arrival localization session to locate the AIoT device.

The apparatus may comprise a network node or user equipment.

The apparatus may further comprise means for transmitting to each of the plurality of activators an identity of the AIoT device that requires localizing.

The apparatus may further comprise means for transmitting to each of the plurality of activators an indication of at least one proposed session type. The session type may comprise a reader terminated time difference of arrival localization procedure for the AIoT device.

The unique activation signal may be unique to a specific activator and AIoT device combination, such that an activation signal sent by the specific activator according to the unique activation signal will activate the AIoT device that requires localizing.

The unique activation signal may be unique to a specific activator and AIoT device combination, such that the AIoT device that receives an activation signal sent by the specific activator according to the unique activation signal will generate a unique reply signal.

The unique activation signal may comprise at least one of the following: a signature in a code domain of an activation signal; a signature in a time domain of an activation signal; a signature in a frequency domain of an activation signal.

The apparatus may further comprise means for identifying a plurality of readers. The plurality of readers may be suitable for receiving a reply signal from the AIoT device to indicate that the AIoT device has been activated.

The apparatus may further comprise means for transmitting to each of the plurality of activators and/or the plurality of readers a request to use a start time, T₀, for commencing a time difference of arrival localization session to locate the AIoT device. The start time may be determined by a synchronization manager.

The synchronization manager may comprise a reader of the plurality of readers or an activator of the plurality of activators.

The apparatus may further comprise means for receiving a plurality of time of arrival measurements from a plurality of readers of the AIoT device; means for computing the time difference of arrival of the plurality of time of arrival measurements from the plurality of readers; and means for determining the location of the AIoT device based on the time difference of arrival.

According to a seventh aspect, there is described a method comprising identifying a plurality of activators, wherein the plurality of activators are for activating an ambient internet of things, AIoT, device; identifying a unique activation signal for each of the plurality of activators; and transmitting to each of the plurality of activators a configuration for their respective unique activation signal, wherein the respective unique activation signal are configured to be transmitted by the activators to activate the AIoT device.

According to an eight aspect, there is provided a computer program product comprising a set of instructions which, when executed on an apparatus, is configured to cause the apparatus to carry out the method of any preceding method definition.

According to a ninth aspect, there is provided a non-transitory computer readable medium comprising program instructions stored thereon for performing a method of any preceding method definition.

### Brief Description of the Drawings

Example embodiments will now be described by way of non-limiting example, with reference to the accompanying drawings, in which:
Fig. 1 shows, by way of example, a network architecture of a communication system;
Fig. 2 shows, by way of example, a topology of an ambient IoT device according to a first embodiment;
Fig. 3 shows, by way of example, a topology of an ambient IoT device according to a second embodiment;
Fig. 4 shows, by way of example, a topology of an ambient IoT device according to a third embodiment and fourth embodiment;
Fig. 5 shows, by way of example, a topology of an ambient IoT device according to a fifth embodiment;
(Fig.6 consists of two parts, namely Fig.6a and Fig.6b) Fig. 6a shows, by way of example, a topology of an ambient IoT device according to the invention. Fig, 6b shows, by way of example, a signalling flow description;
Fig. 7 shows, by way of example, a flowchart of a method;
Fig. 8 shows, by way of example, a signalling flow description of a TDOA localization session;
Fig. 9 shows, by way of example, a flowchart of a method;
Fig. 10 shows, by way of example, a flowchart of a method;
Fig. 11 shows, by way of example, a sidelink communication;
Fig. 12 shows, by way of example, a flowchart of a method;
Fig. 13 shows, by way of example, a block diagram of an apparatus.

### Detailed Description

Example embodiments may relate to an apparatus, method and/or computer program for managing TCI state activation.

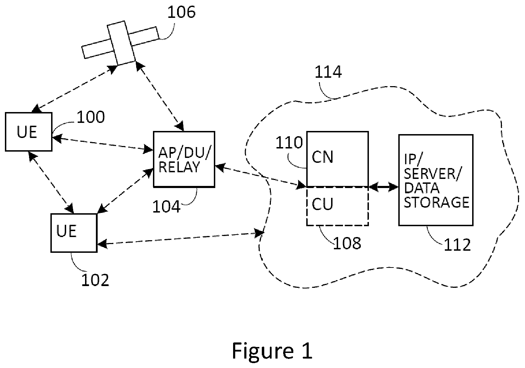

Figure 1 shows, by way of an example, a network architecture of a communication system which is a radio access network (RAN). In the following, different exemplifying embodiments will be described using, as an example of an access architecture to which embodiments may be applied, a radio access architecture based on long term evolution advanced (LTE Advanced, LTE-A) or new radio (NR), also known as fifth generation (5G), without restricting the embodiments to such an architecture, however. Embodiments may also be applied to other kinds of communications networks having suitable means by adjusting parameters and procedures appropriately. Some examples of other options for suitable systems are the universal mobile telecommunications system = radio access network, long term evolution (LTE), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

Figure 1 shows first and second user devices 100, 102 configured to be in a wireless connection on one or more communication channels in a cell with a network node, such as a network node 104 providing a cell. The physical link from a user device, e.g., the first user device 100, to the network node 104 is called the uplink (UL) or reverse link and the physical link from the network node to the user device is called the downlink (DL) or forward link. It should be appreciated that network nodes and their functionalities may be implemented by using any node, host, server or access point entity suitable for such a usage. A communications system typically comprises more than one network node in which case the network nodes may also be configured to communicate with one another over links, wired or wireless, designed for the purpose. These links may be used for signaling purposes. A network node is a computing device configured to control the radio resources of the communication system it is coupled to. A network node may also be referred to as a TRP, base station (BS), an access point or any other type of interfacing device including a relay station capable of operating in a wireless environment. A network node may include or is coupled to transceivers. From the transceivers of the network node 104, a connection may be provided to an antenna unit that establishes bi-directional radio links to user devices, such as the first and second user devices 100, 102. The antenna unit may comprise a plurality of antennas or antenna elements, for example arranged as an antenna array. The network node 104 may further be connected to a core network 110.

The user device, or user equipment UE, typically refers to a portable computing device that includes wireless mobile communication devices operating with or without a subscriber identification module (SIM), including, but not limited to, the following types of devices: a mobile station (mobile phone), smartphone, personal digital assistant, handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction.

5G enables using multiple input and multiple output technology at both the UE and network node side, many more base stations or nodes than the LTE. 5G mobile communications supports a wide range of use cases and related applications including video streaming, augmented reality, different ways of data sharing and various forms of machine type applications, including vehicular safety, different sensors and real-time control. 5G is expected to have multiple radio interfaces, namely below 7GHz, cmWave and mmWave, and also being integratable with existing legacy radio access technologies, such as the LTE. Below 7GHz frequency range may be called as FR1, and above 24GHz (or more exactly 24- 52.6 GHz) as FR2, respectively. Integration with the LTE may be implemented, at least in the early phase, as a system, where macro coverage is provided by the LTE and 5G radio interface access comes from small cells by aggregation to the LTE.

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Figure 1 by "cloud" 114). The communication system may also comprise a central control entity, or a like, providing facilities for networks of different operators to cooperate for example in spectrum sharing.

An edge cloud may be brought into radio access networks (RANs). Using an edge cloud may mean access node operations to be carried out, at least partly, in a server, host or node operationally coupled to a remote radio head or base station comprising radio parts. It is also possible that node operations will be distributed among a plurality of servers, nodes or hosts. Applications of cloud RAN architecture enables RAN real time functions being carried out at the RAN side (in a distributed unit, DU 104) and non-real time functions being carried out in a centralized manner (in a centralized unit, CU 108).

Beam management is applied during a random access channel (RACH) procedure, when the UE forms the initial connection with the network, and while the UE is in a connected state. In a connected state, transmitting beams and receiving beams may be refined.

A user device may also be a device having capability to operate in Internet of Things (IoT) network which is a scenario in which objects are provided with the ability to transfer data over a network without requiring human-to-human or human-to-computer interaction. Regarding IoT applications, 3GPP has specified NB-IoT/eMTC and NR RedCap before R18 to satisfy the requirements on low cost and low power devices for wide area IoT communication. These IoT devices usually consume tens or hundreds of milliwatts power during transceiving, while the cost is a few dollars. However, to achieve the internet of everything, IoT devices with ten or even a hundred times lower cost and power consumption are needed, especially for a large number of applications requiring battery-less devices.

The number of IoT connections has been growing rapidly in recent years and is predicted to be hundreds of billions by 2030. With more 'things' expected to be interconnected for improving production efficiency and increasing comforts of life, it demands further reduction of size, cost, and power consumption for IoT devices. In particular, regular replacement of battery for all the IoT devices is impractical due to the tremendous consumption of materials and manpower. It has become a trend to use energy harvested from environments to power IoT devices for self-sustainable communications, especially in applications with a vast number of devices (e.g., ID tags and sensors).

The most critical issue with existing 3GPP technologies for the target use cases is the capability of cooperating with energy harvesting considering limited device size. Cellular devices usually consume tens or even hundreds of milliwatts power for transceiver processing. Taking NB-IoT module for example, the typical current consumption for receive processing is about 60mA with supply voltage higher than 3.1V, while 70mA for transmitting processing at 0dBm transmit power. Furthermore, the output power provided by typical energy harvester is mostly below 1 milliwatt, considering the small size of a few square centimeters for practical devices. Since the available power is far less than the consumed power, it is impractical to power cellular devices directly by energy harvesting in most cases.

One possible solution is to integrate energy harvesting with rechargeable battery or supercapacitor. However, there are still a few problems to be solved. Firstly, both rechargeable battery and supercapacitor may suffer from shortened lifetime in practical cases. It is hard to provide constant charging current or voltage by energy harvesting, while longtime continuous charging is needed due to the very small output power from energy harvester. Inconstant charging current and longtime continuous charging are both harmful to battery life. For supercapacitor, its lifetime will be significantly reduced in high temperature environments (e.g., less than 3 years at 50 degrees centigrade). Secondly, device size will be significantly increased. As small size button battery can only provide current of a few tens of milliamps, battery with much larger size (e.g., AA battery) is usually used to power cellular devices, whose size can be even larger than the module itself. To store energy for a proper duration of working (e.g., one second), the required capacitance of a supercapacitor is at the level of a hundred mill-farads. The size of such supercapacitors may be larger than an NB-IoT module. Thirdly, both rechargeable batteries and supercapacitors can be more expensive than the module itself. Even purchased in large quantities, the cost of a suitable battery or supercapacitor may reach one or a few dollars, which nearly doubles the cost of the device.

RFID is the most well-known technology supporting battery less tags (devices). The power consumption of commercial passive RFID tags can be as low as 1 microwatt. The key techniques enabling such low power consumption are envelope detection for downlink data reception, and backscatter communication for uplink data transmission. RFID is designed for short-range communications, whose typical effective range is less than 10 meters. As the air interface of RFID almost remains unchanged since 2005, the too-simple transmission scheme becomes the obstacle of improving its link budget and capability of supporting scalable network.

Attracted by the extremely low power consumption of backscatter communication, many non-3GPP technologies begin to put efforts into related research, such as Wi-Fi, Bluetooth, UWB, and LORA. Various research show that a few or tens of microwatts power consumption can be supported for passive tags based on or with small modifications to the above air interfaces. A significant proportion of the studies are targeting at long range communication. Among them, a LoRa tag implemented with commercial off-the-shelf components can send its sensing data to the receiver of 381 meters away. Currently, most of the studies are focusing on independent detailed techniques for various optimization targets. It is hard to see a comprehensive system design fully meeting the requirements of the target use cases. However, the standardization of those technologies is agile and quick, as the industries usually follow some de facto standards. It means that many products in the market will follow even a private standard once it shows competitiveness in some applications.

A passive radio is a device that harnesses energy from wireless signals sent on specific carriers and/or bandwidths and charges a simple circuitry that, once activated, it will emit/reflect a signal which encodes at least the ID of the passive radio. The typical system architecture around a passive radio consists of:
1. An activator: a device that sends an activation signal targeted at waking up the passive radio.
2. The passive radio: harnesses energy over a range of frequencies and listens for activation signals. Once such a signal is detected, the passive radio emits/reflects a signal which is specific to that radio ID.
3. A reader: a device that listens and detects the passive radio signals. The reader may or may not be collocated with the activator.

The following two main types of energy storage are considered:
Passive: Pure battery-less devices with no energy storage capability at all, and completely dependent on the availability of an external source of energy
Semi-Passive: Devices with limited energy storage capability that do not need to be replaced or recharged manually.

Ambient IoT devices can be either passive or semi-passive in terms of their energy storage.

Several connectivity topologies for Ambient IoT networks and devices are disclosed. In all these topologies, the Ambient IoT device may be provided with a carrier wave from other node(s) either inside or outside the topology. The links in each topology may be bidirectional or unidirectional. BS, UE, assisting node, or intermediate node could be multiple BSs or UEs, respectively. The mixture of indoor and outdoor placement of such nodes is regarded as a network implementation choice.

An Ambient IoT (AIoT) system is in its simplest form composed by an AIoT activator, an AIoT reader and an AIoT device. In topologies termed as monostatic, the AIoT activator and reader are the same network element (or device). This implies, that for where the AIoT device reply is a backscattered transmission, that the network element (or device) taking the role of AIoT activator and reader is able to operate in a full duplex fashion being able to transmit an activation signal while simultaneously receiving the reply from the AIoT device. In contrast, for topologies termed as bistatic (or multi-static), the AIoT activator and the AIoT reader are two different network elements (or devices) and therefore there is no longer the need for full duplex operation in the AIoT activation and reader devices. Therefore, bistatic topologies, from a NW and non-AIoT supporting device point of view, are seen as less technically challenging. The activator is herein referred to this is both for ease of exposition as well as due to the activator needing to be in the proximity of the AIoT device and as such is also likely to be a device/UE.

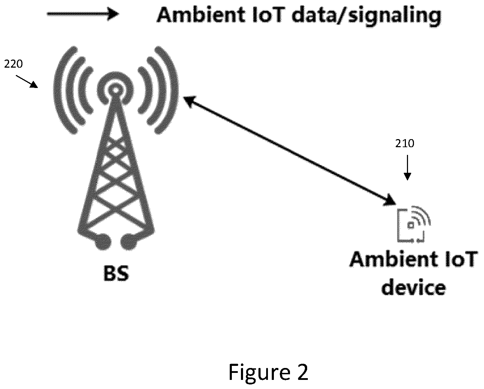

According to a first topology, provided by way of example, as shown in Figure 2, the Ambient IoT device 210 directly and bidirectionally communicates with a base station 220. The communication between the base station 220 and the ambient IoT device 210 includes Ambient IoT data and/or signaling. This topology includes the possibility that the BS transmitting to the Ambient IoT device is a different from the BS receiving from the Ambient IoT device.

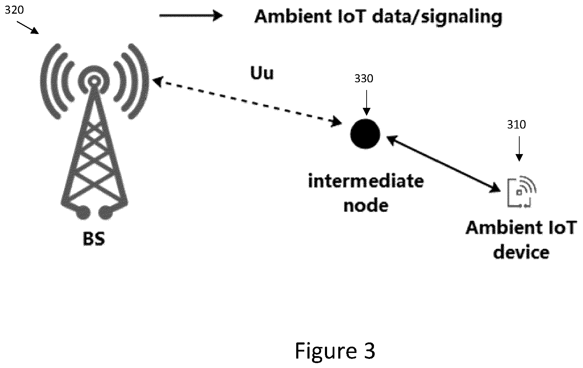

According to a second topology, provided by way of example, as shown in Figure 3, the Ambient IoT device 310 communicates bidirectionally with an intermediate node 330 between the Ambient IoT device 310 and base station 320. In this topology, the intermediate node 330 can be a relay, IAB node, UE, repeater, etc. which is capable of Ambient IoT. The intermediate node 330 transfers the information between BS and the Ambient IoT device.

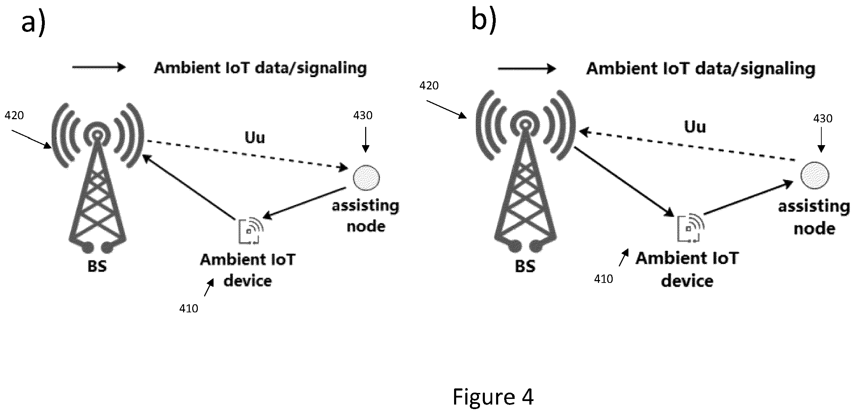

According to a third topology, provided by way of example, as shown in Figures 4a and 4b, the Ambient IoT device 410 transmits data/signaling to a base station 420 and receives data/signaling from the assisting node 430 (as shown in Figure 4a for downlink assistance). Alternatively, the Ambient IoT device 410 receives data/signaling from a base station 420 and transmits data/signaling to the assisting node 430 (as shown in Figure 4b for uplink assistance). In the third topology, the assisting node 430 can be a relay, IAB, UE, repeater, etc. which is capable of ambient IoT.

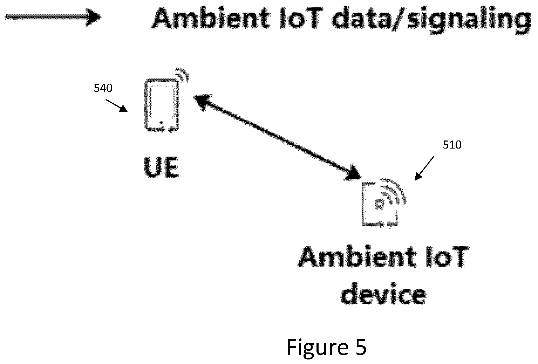

According to a fourth topology, provided by way of example, as shown in Figure 5, the Ambient IoT device 510 communicates bidirectionally with a UE 540. The communication between UE 540 and the ambient IoT device 510 includes Ambient IoT data and/or signalling.

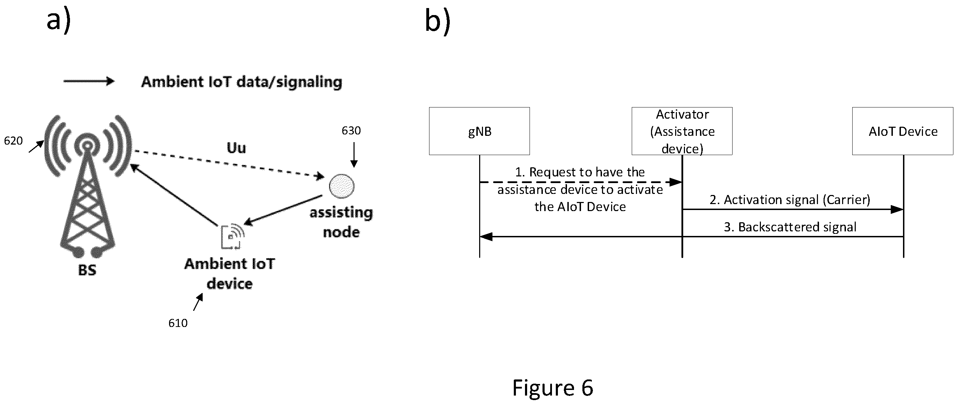

In example embodiments of this invention we focus on the third topology as depicted in Figure 6a. When taking a look at the stage-1 signalling flow, as depicted in Figure 6b, it can be observed that the interaction between the network node 620, activator (i.e., assisting node) 630 and AIoT device 610 is composed by the following steps. Firstly, the network node 620 requests for the assistance device (i.e., the activator) to activate the AIoT device, as depicted by item 1 in Figure 6b. Secondly, the activator 630 sends the activation signal, which is a signal carrier suitable for being backscattered (i.e., for the AIoT to modulate on top its reply signal), as depicted by item 2 in Figure 6b. Subsequently, the AIoT device 610 replies to the network node 620 using a backscattered signal, as depicted by item 3 in Figure 6b.

Localizing an AIoT device requires that either the AIoT device measures and reports positioning signal measurements of multiple sources, or the AIoT device transmits positioning signals detectable and measurable by multiple receivers. In order to the reader to unambiguously distinguish between replies from an AIoT device triggered by different activation there must be an unambiguous relationship between the AIoT reply instance R and activation signal instance A. Without such an unambiguous relationship constraint in place AIoT reply instance R and activation signal instance A, TDOA differentiation of measurements will not remove the contribution of the unknown propagation delay between the activator and the AIoT device. Furthermore, the readers and activator may be synchronized to a common synchronisation source, i.e., start the localization procedure at the same time T₀. Providing for these requirements is challenging for many reasons such as:
- Depending on the device typology it may have sufficient charge and/or intelligence to only perform a subset of tasks.
- The AIoT device location is unknown, therefore, in many cases, multiple activators may need to be configured, to ensure that the AIoT device gets activated to begin with. In this case, it is challenging to ensure that there is an unambiguous relationship between the AIoT reply instance R and activation signal instance A.
- Transmissions from multiple AIoT devices of both positioning signals and RX-TX time difference result in high AIoT cross-interference, since the density of such devices may be many orders of magnitude higher than that of typical NR UEs.

The subject matter disclosed herein addresses the above described challenges.

### Negotiation of primary activators

One solution for ensuring an unambiguous relationship between an AIoT activation signal instance A and AIoT reply instance R is to negotiate a single activator that will provide an activation signal to the AIoT device. The activators and/or location management function LMF may communicate with each other to select a primary activator that will be responsible for activating the AIoT device.

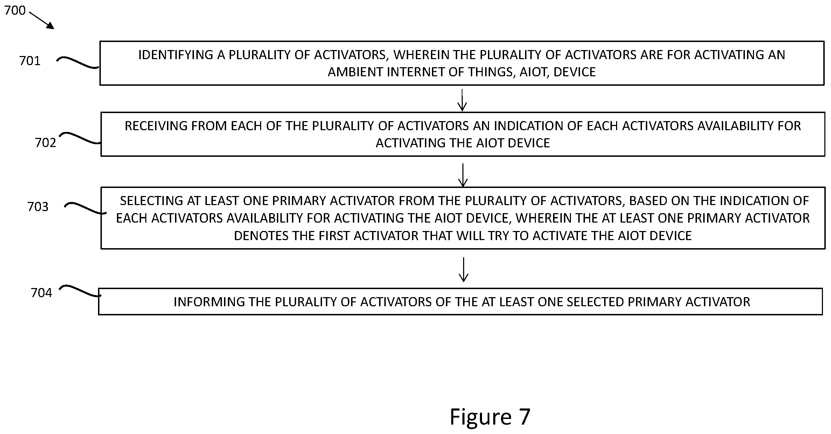

Figure 7 shows, by way of example, a flowchart of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 700 comprises a first operation 701 of identifying a plurality of activators. The plurality of activators are suitable for activating an AIoT device. Identifying the plurality of activators of activators also comprise receiving or determining a unique identifier for each of the activators. The plurality of activators may be identified from within a certain location or region that is in proximity to the AIoT device. It is desirable to identify all activators that may be available for activating the AIoT device so that they can report an indication of their availability and the most suitable activator can be selected.

The method 700 comprises a second operation 702 of receiving from each of the plurality of activators an indication of each activators availability for activating the AIoT device. The indication of each activators availability for activating the AIoT device may, for example, include at least one of the following: an indication of an activator's current involvement in radio traffic and/or whether an activator is in radio resource control, RRC, connected state or RRC inactive state and/or whether an activator is immediately available for activating the AIoT device. The indication of availability for activating the AIoT device may also comprise information about the current radio traffic that the activator is involved in so that this can also be used. The plurality of activators may also report on their power consumption levels and availability of resources.

The method 700 comprises a third operation 703 of selecting at least one primary activator from the plurality of activators. As referred to herein, the at least one primary activator denotes the first activator from the plurality of activators that will try to activate the AIoT device. In other words, the at least one primary activator will be selected as the most suitable activator from the plurality of activators and as such will be responsible for activating the plurality of activators. The selection of the at least one primary activator from the plurality of activators may be based on the indication of each activators availability for activating the AIoT device. In other words, an assessment is made of the most suitable activator for acting as the primary activator based on the information that has been received regarding each activator's availability. This means that the most appropriate primary activator can be selected and as such the AIoT device can be activated more reliably and quickly since the primary activator has good availability to send the activation signal to activate the AIoT device.

The method 700 comprises a fourth operation 704 of informing the plurality of activators of the at least one selected primary activator.

The benefits of the proposed method 700 include ensuring that AIoT device positioning ambiguity due to multiple activators is resolved. Since only one activator is used (and therefore only one activation signal is sent to the AIoT device and one response to the activation signal is sent from the AIoT device to the readers), fewer signals are being sent and there is a reduced risk of signal interference.

In some embodiments, the method 700 may further comprise ranking the plurality of activators to establish a hierarchical list based on the indication of each activators availability for activating the AIoT device. The hierarchical list may include at the start of the list the activators which are most suitable for acting as the primary activator, for example, because they are not currently involved in radio traffic and they are in a RRC connected state and as such are ready to commence as the primary activator. The hierarchical list may include at the end of the list the activators which are least suitable for acting as the primary activator, for example, because they are currently involved in radio traffic and/or they are in a RRC inactive state and as such are not immediately ready to commence as the primary activator. The hierarchical list may account for the resource availability of each activator e.g. energy and radio traffic. Upon establishing the hierarchical list, the method 700 may also comprise informing the plurality of activators of the hierarchical list. As such, all activators are made aware of their position in the list and therefore their likelihood of being selected as the primary activator. The method 700 may also comprise selecting at least one activator from the hierarchical list to be the primary activator. Usually, the primary activator will be selected as the first activator in the list (because it is most suitable for activating the AIoT device), although, other selection criteria may be used to take account for different priority parameters.

Ranking the plurality of activators to establish the hierarchical list may comprise allocating each activator of the plurality of activators into at least one priority group. By way of example, the priority groups may be as follows:
- A low priority group for any activators that are currently involved in radio traffic.
- A medium priority group for any activators that are radio resource control, RRC, inactive state.
- A high priority group for any activators that are immediately available for activating the AIoT device.

As such, the hierarchical list may be divided into groups (e.g. three groups to account for low, medium and high priority respectively). Selecting the at least one primary activator from the plurality of activators may comprise selecting an activator in the high priority group, since these are immediately available for activating the AIoT device and therefore provide the most efficient solution for activating the AIoT device. Furthermore, informing the plurality of activators of the at least one selected primary activator may comprise informing the plurality of activators of the activators allocated to the at least one priority group.

The method 700 may further comprise selecting a standby activator based on the indication of each activators availability for activating the AIoT device. The standby activator denotes the second activator that will try to activate the AIoT device if the primary activator is not successful at activating the AIoT device. Similarly, the method may comprise informing the plurality of activators of the selected standby activator. The standby activator is selected as the second option for activating the AIoT device in the event the primary activator was not successful for any reason. By selecting a standby activator alongside selecting the primary activator the process of determining the plurality of activators availability for activating the AIoT device does not need to be repeated in the scenario that the primary activator was not successful at activating the AIoT device. This allows time saving in the event the primary activator was not successful and avoid delay in activating the AIoT and therefore delay in the localisation procedure.

The method 700 may further comprise determining, or receiving an indication of, a "synchronisation manager". The synchronisation manager may define a start time, T₀, for commencing a TDOA localisation session to locate the AIoT device. The purpose of the synchronisation manager is to ensure that the reader and activators use a common time reference (generated by the "synchronisation manager") and that it is ensured that their clocks have not drifted substantially since last synchronization instance. The activators and readers use synchronize to the synchronisation manager which sets the same start time T₀ for the TDOA localisation session. The method 700 may comprise determining the start time, T₀ or receiving an indication of the start time, T₀, from the synchronisation manager.

Optionally, the method 700 may comprise for determining an identity of the AIoT device that requires localising; and selecting the plurality of activators suitable for activating the AIoT device, based on the identity of the AIoT device that requires localising.

Optionally, the method 700 may also further comprise determining an activation signal for activating the AIoT device. The same activation signal is determined regardless of the activator selected from the plurality of activators and informing the plurality of activators of the activation signal.

In a first scenario the method may be performed by an activator of the plurality of activators. In this first scenario an activator acts as an "activator manager" to determine which of the activators is to be selected as the at least one primary activator.

In a second scenarios the method may be performed by location management function, LMF. The LMF is suitable for performing the TDOA to locate the AIoT device. In this second scenario the LMF acts as an "activator manager" to determine which of the activators is to be selected as the at least one primary activator. In this second scenario the second operation 702 of receiving from each of the plurality of activators an indication of each activators availability for activating the AIoT device may comprise receiving a positioning protocol information element, IE, capability report from each activator. In this second scenario the fourth operation 704 of informing the plurality of activators of the at least one selected primary activator may comprise distributing the at least one selected primary activator via at least one additional information element. In other words, the activators may inform via LPP capability indication procedure, and the configuration of the primary may be sent via LPP assistance data transfer.

The "activator manager" may be selected randomly or according to a set of predetermined criteria to determine the best "activator manager" (e.g. an activator of the plurality of activators or the LMF).

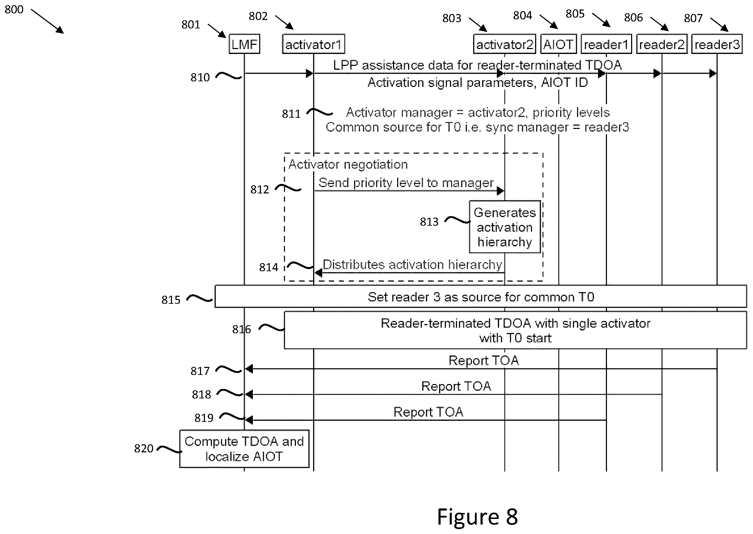

Figure 8 is a further flowchart 800 of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations. Figure 8 depicts an exemplary embodiment of signalling flow description of AIoT device activation.

In the example shown in Figure 8, an LMF 801 triggers a TDOA localization session which terminates in the reader. i.e., a session in which only the readers perform positioning measurements. For this, the LMF 801 selects a set of activators 802, 803 (e.g. UEs and gNBs), and a set of readers 805, 806 and 807. The activators 802, 803 are suitable for activating an AIOT device 804 and the readers are suitable for reading a signal received from the activated AIOT device 804.

At a first step 810, the LMF 801 sends over (e.g. via LTE Positioning Protocol) assistance data for the reader terminated TDOA localization session. This assistance data may include at least one of the following:
- An identification of the AIOT device(s) 804 which need localization.
- An activation signal configuration. The activation signal is unique to the AIOT device and not to the activator itself. In other words, activation signal *a*(*t, IDx*) will always activate AIOT device *IDx,* regardless of the radio that transmits it. As such, the activation signal is agnostic to the activator and the benefit of this approach is that the activator caused interference is reduced.
- A session type (e.g. reader-terminated TDOA localization session).
- A request for the activators and readers to negotiate an "activator manager". The activator manager selection may be managed by a randomly selected activator from a plurality of activators or by the LMF 801.
- A request for the activators and readers to negotiate a "synchronisation manager". The synchronisation manager provides a common clock usage. The synchronisation manager may be a randomly selected activator 802, 803 or reader 805, 806, 807 or the LMF 801.

At step 811, an activator manager is selected. By way of demonstration only, in Figure 8, a "activator2" 803 is selected as the activator manager, although this could also be performed by "activator1" 802 or the LMF 801. Furthermore, at step 811 a synchronisation manager is also selected. By way of demonstration only, in Figure 8, a "reader3" 807 is selected as the synchronisation manager, although this could also be performed by any of "activator1" 802, "activator2" 803, "reader1" 805, "reader2" 806 or the LMF 801.

At steps 812-814 the activator negotiation takes place, as described above in relation to Figure 7. The candidate activators (activators 802 and 803) proceed with a negotiation for generating a hierarchy of activators. The negotiation happens by each candidate sending to the activator manager an activator priority level which is indicative of the availability of said radio for becoming an activator (see step 812). By way of example:
- Priority level 0 may indicate low priority - the candidate may currently be involved in radio traffic.
- Priority level 1 may indicate medium priority - the candidate may currently be in RRC inactive.
- Priority level 2 may indicate high priority - the candidate radio is immediately available.

The activator manager, "activator2" 803, receives the information above from all candidate activators and generates (step 813) and distributes (step 814) a hierarchical list of activators, where the first activator in the list is the primary activator, the second activator in the list is the standby activator. The standby activator becomes primary only if the session initiated by the primary activator has failed.

At step 815, the activators and readers all synchronize to synchronisation manager, "reader3" 807, which sets the same start time T₀ for the TDOA procedure.

At step 816, once the start time T₀ has been set across all activators and readers and the primary activator has been negotiated, the primary activator activates the AIOT device 804. This commences the reader-terminated TDOA with a single activator (the primary activator) at the start time T₀. The AIOT device 804 is activated and replies and the multiple readers measure the time of arrival (TOA) of the reply (see steps 817 to 819). The measurements are reported to the LMF which now computes differences between the TOAs and obtains the TDOA measurement which is further used to localize the AIOT device 804 as per standard triangulation procedures.

### Multiple activators

A second solution for ensuring an unambiguous relationship between an AIoT activation signal instance A and AIoT device reply instance R is to identify and use a unique activation signal for all activators. As such, all activators may send an unique activation signal and the AIoT device may reply using a unique activation signal.

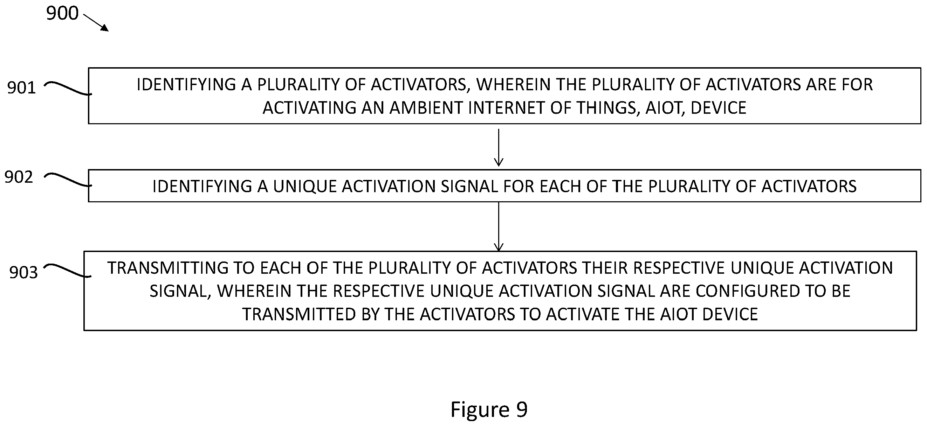

Figure 9 shows, by way of example, a flowchart of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 900 comprises a first operation 901 of identifying a plurality of activators. The plurality of activators are for activating an ambient internet of things, AIoT, device. Identifying the plurality of activators may be carried out in the same way as described in relation to the first operation 701 of method 700 of Figure 7.

The method 900 comprises a second operation 902 of identifying a unique activation signal for each of the plurality of activators. The unique activation signal may be unique to a specific activator and AIoT device combination, such that an activation signal sent by the specific activator according to the unique activation signal will activate the AIoT device that requires localising. In other words, activation signal *a*(*t, IDaiot, IDact*) sent by activator *IDact* will always activate AIOT device *IDaiot.* The unique activation signal may also be unique to a specific activator and AIoT device combination, such that the AIoT device that receives an activation signal sent by the specific activator according to the unique activation signal will generate a unique reply signal. In other words, activation signal *a*(*t, IDaiot, IDact*) sent by activator *IDact* will always activate AIOT device *IDaiot* to reply with a signal *r*(*t, IDaiot, IDact*)*.* The unique reply may be received by a reader which understands the unique reply and can ascertain that the reply is in response to the unique activation signal from the specific activator.

The unique activation signal may include at least one of the following:
- a signature in a code domain of an activation signal;
- a signature in a time domain of an activation signal;
- a signature in a frequency domain of an activation signal.

In other words, the uniqueness of the activation signal may be realised by assigning a unique signature in a code domain, time domain and/or frequency domain.

The method 900 may comprise a third operation 903 of transmitting to each of the plurality of activators their respective unique activation signal. The respective unique activation signal are configured to be transmitted by the activators to activate the AIoT device.

The benefit of this approach using multiple activators is that probability of activation failure is reduced. In other words, the more activators attempt to trigger an AIOT device, the more likely it is that the device will reply.

In a first scenario the method 900 may be performed by an activator of the plurality of activators. In this first scenario an activator acts as an "activator manager" to determine the unique activation signals for each of the activators.

In a second scenarios the method 900 may be performed by location management function, LMF. The LMF is suitable for performing the TDOA to locate the AIoT device. In this second scenario the LMF acts as an "activator manager" to determine the unique activation signals for each of the activators.

Optionally, the method 900 may further comprise transmitting to each of the plurality of activators an identity of the AIoT device that requires localising. As such, each of the plurality of activators is aware of the AIoT device that requires localising.

Optionally, the method 900 may further comprise transmitting to each of the plurality of activators an indication of at least one proposed session type, wherein the session type comprises a reader terminated time difference of arrival localisation procedure for the AIoT device. As such, each of the plurality of activators are aware of the type of session for which they are required to take part in. As such, they can modify the parameters of the activation accordingly.

Optionally, the method 900 may further comprise identifying a plurality of readers. The plurality of readers are suitable for receiving a reply signal from the AIoT device to indicate that the AIoT device has been activated. The method may also include, transmitting to each of the plurality of activators and/or the plurality of readers a request to use a start time, T₀, for commencing a time difference of arrival localisation session to locate the AIoT device. The start time is determined by a "synchronisation manager" as previously described herein. The "synchronisation manager" may be a reader of the plurality of readers or an activator of the plurality of activators.

Optionally, the method 900 may further comprise receiving a plurality of time of arrival measurements from a plurality of readers of the AIoT device and computing the time difference of arrival of the plurality of time of arrival measurements from the plurality of readers. The method 900 may further include determining the location of the AIoT device based on the time difference of arrival according to standard triangulation techniques.

### Synchronisation

A further solution is discussed herein for providing a method for distributed synchronization, so that out-of-coverage mobile users with- or without- global navigation satellite system, GNSS, capabilities can synchronize with each other and with the cellular network. Activators and readers in a network may exchange synchronization signals in via sidelink communication to ensure that they are synchronised. The purpose of the synchronisation is to defines the start time, T₀, for commencing a TDOA localisation session to locate the AIoT device. This ensures that the reader and activators use a common time reference (generated by a "synchronisation manager") and that it is ensured that their clocks have not drifted substantially since last synchronization instance.

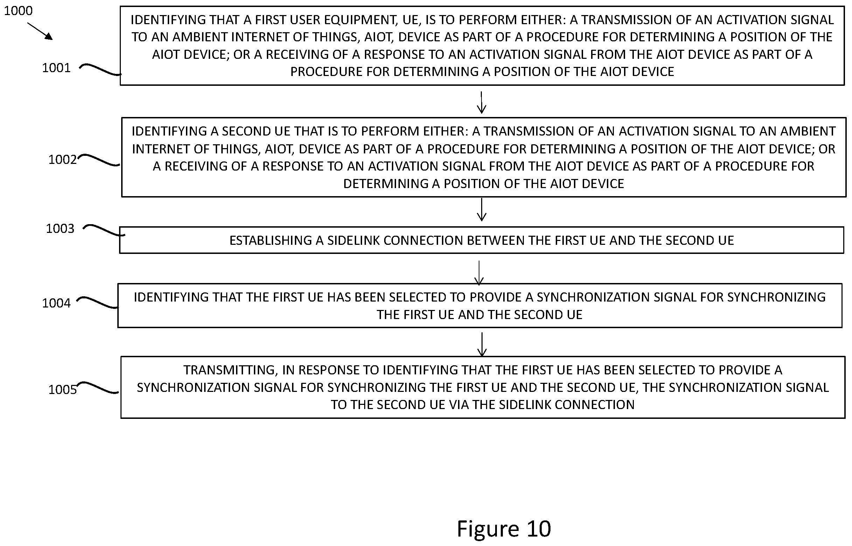

Figure 10 shows the scenario from the point of view of a UE which has been selected as the source of the synchronisation, i.e. the "synchronisation manager". Figure 10 shows, by way of example, a flowchart of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 1000 may comprise a first operation 1001 of identifying that a first user equipment, UE, is to perform either: a transmission of an activation signal to an AIoT device as part of a procedure for determining a position of the AIoT device or a receiving of a response to an activation signal from the AIoT device as part of a procedure for determining a position of the AIoT device. In other words, the first UE may be an activator suitable for activating an AIoT, device or a receiver suitable for receiving at least one signal from an activated AIoT device.

The method 1000 may comprise a second operation 1002 of identifying a second UE that is to perform either: a transmission of an activation signal to an ambient internet of things, AIoT, device as part of a procedure for determining a position of the AIoT device or a receiving of a response to an activation signal from the AIoT device as part of a procedure for determining a position of the AIoT device. In other words, the second UE may be an activator suitable for activating an AIoT, device or a receiver suitable for receiving at least one signal from an activated AIoT device.

The method 1000 may comprise a third operation 1003 of establishing a sidelink connection between the first UE and the second UE. Sidelink transmissions enable direct communications between two UEs without signal relay through a base station. Such transmissions may be used for, e.g., public safety, vehicle-to-everything (V2X) services, Proximity Services (ProSe), sidelink relaying services, device-to-device (D2D) communications, etc. Sidelink transmissions continue to be of interest in 3GPP New Radio (NR), enabling low latency, high reliability and high throughput services.

Sidelink communication may be understood as communication between terminal devices in which the terminal devices connect to each other directly without RAN involvement, in other words, without directly relaying the data via a network such as a cellular communication network. Such terminal devices may be of any suitable type such as mobile phones, vehicles, robots or wearable consumer electronic devices. Sidelink communication may be enabled by 5G and/or 4G technology.

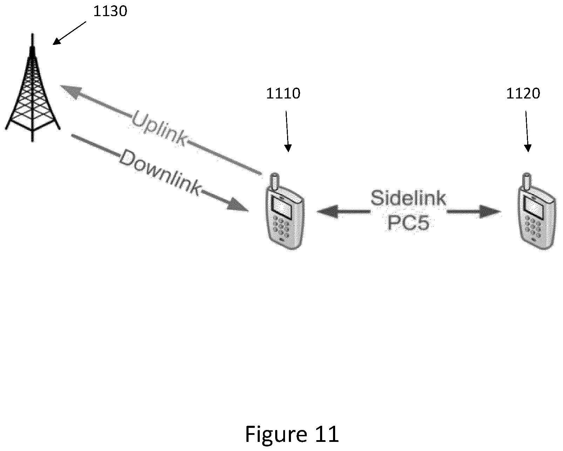

Figure 11 illustrates an exemplary embodiment of sidelink communication between the first UE 1110 and the second UE 1120. The first UE and second UE 1100 may each correspond to at least one activator or reader. In this exemplary embodiment the first UE 1110 and second UE 1120 are mobile phones, but other terminal devices and/or network infrastructures could also be used. In this exemplary embodiment the second UE 1120 sends and receives sidelink transmissions of data from the first UE 1110, which is in connection with a network node. Sidelink communication may used to support use cases such as vehicle-to-everything (V2X), public safety, commercial and industrial-internet-of-things (IIoT). Sidelink communication may take place via the sending and receipt of sidelink reference signals. In the example of Figure 11, the first UE 1110 has been selected as a primary reference device and the second UE 1120 has been selected as a secondary reference device.

Turning back to Fig10, the method 1000 may comprise a fourth operation 1004 of identifying that the first UE has been selected to provide a synchronization signal for synchronizing the first UE and the second UE. In other words, the first UE has been selected as a primary reference device in the sidelink connection and that the second UE has been selected as a secondary reference device in the sidelink connection.

Optionally, identifying that the first UE has been selected to provide the synchronization signal may include receiving from a location management function, LMF, an indication that the first UE is to provide the synchronization signal. In this way, the LMF may be responsible for selecting the first UE as the primary reference signal.

The method 1000 may comprise a fifth operation 1005 of transmitting, in response to identifying that the first UE has been selected to provide a synchronization signal for synchronizing the first UE and the second UE, the synchronization signal to the second UE via the sidelink connection. The transmission of the reference signal is received by the second UE and as such both the first UE and the second UE are using the same reference clock and start time, T₀, for the TDOA positioning procedure. The synchronization signal may include includes the start time, T₀, for use by the first UE and the second UE, where T₀ is a time for commencing a time difference of arrival localization session to locate the AIoT device.

The first UE may determine whether the sidelink positioning signal is a suitable approach for synchronizing the first UE and second UE before commencing the sidelink communication. In this scenario, the method 1000 may also optionally comprise determining whether the first UE and the second UE are associated with the same network node and determining whether the first UE and/or second UE are connected to the network node. If the first UE and second UE are associated with and connected to the same network, then instead of using a sidelink communication the first UE and second UE may instead be synchronized based on the mutual network node (i.e. via the reference clock of the network node). Upon determining that the first UE and second UE are not associated with the same network node or that at least one of the first UE and second UE are not connected to the network node, then the sidelink connection may be established between the first UE and the second UE to synchronize the first UE and the second UE, since the network node is not suitable as a reference.

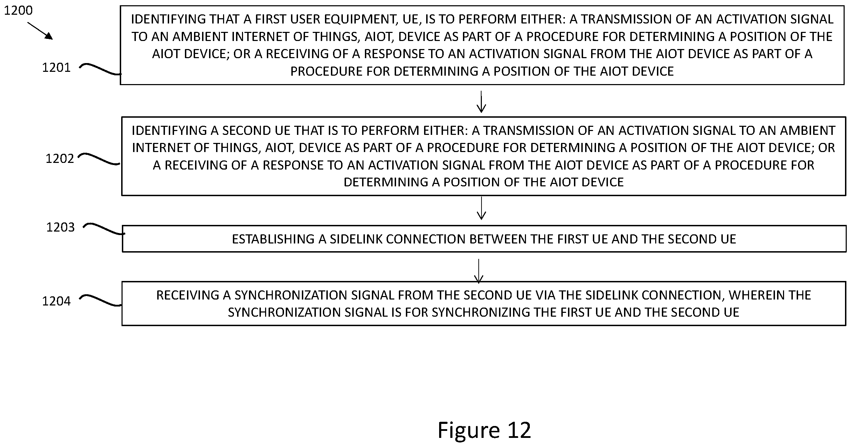

Figure 12 shows the scenario from the point of view of a UE which has not been selected as the source of the synchronisation, i.e. not the "synchronisation manager". Figure 12 shows, by way of example, a flowchart of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 1200 may comprise a first operation 1201, second operation 1202 and third operation 1203 which correspond to the first operation 1001, second operation 1002 and second operation 1002 of Figure 10 respectively. In the scenario of Figure 12, there is a fourth operation 1204 which comprises receiving a synchronization signal from the second UE via the sidelink connection. The synchronization signal is similarly for synchronizing the first UE and the second UE and has been transmitted from the UE that has been selected to provide the transmission of the synchronisation signal. The second UE uses the synchronisation signal to synchronise with the first UE and as such both the first UE and the second UE use the same reference clock and start time T₀ for the TDOA localization procedure.

The same principles of sidelink communication, as described in relation to Figure 11, apply to the method 1200 of Figure 12.

The first UE described in relation to Figures 10 to 12 may optionally be an activator among a plurality of activators, each of the plurality being configured to send an indication of its respective availability for activating the AIoT device. In accordance with the disclosure of Figure 7 and corresponding description, a primary activator may be selected from the plurality of activators based on the indications, where the primary activator denotes the first activator that will try to activate the AIoT device. The plurality of activators may be informed of the selected primary activator. Additionally, the first UE may be selected to be the primary activator.

The first UE described in relation to Figures 10 to 12 may optionally be activator among a plurality of activators, each activator of the plurality having a unique activation signal configuration in accordance with the disclosure of Figure 9 and corresponding description. The respective unique activation configurations are configured to be transmitted by the activators to activate the AIoT device.

If one or both of the first and second UEs have GNSS capabilities and access to GNSS the devices then optionally, the first and second UEs can synchronize directly with GNSS or sharing the GNSS synchronization information if only one of capable and/or connected.

The benefits of the above disclosed synchronization include reducing AIoT device positioning error due to the use of different synchronization source usage. By using the same reference clocks accuracy in the measurements of the TDOA procedure can be increase and therefore error in the final positioning of the AIoT device reduced.

The solutions described herein may be used in combination or independently. For example, the synchronisation solution discussed in Figures 10 and 12 may be implemented simultaneously to the solutions discussed in Figures 7 and 9.

### Example apparatus

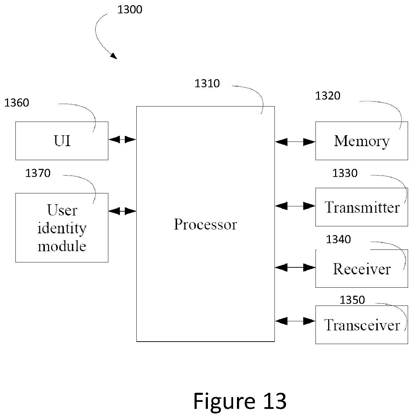

Figure 13 shows, by way of example, a block diagram of an apparatus capable of performing the method(s) as disclosed herein. Illustrated is device 1300, which may comprise, for example, a mobile communication device such as mobile 100 of Figure 1. Comprised in device 1300 is processor 1310, which may comprise, for example, a single- or multi-core processor wherein a single-core processor comprises one processing core and a multi-core processor comprises more than one processing core. Processor 1310 may comprise, in general, a control device. Processor 1310 may comprise more than one processor. Processor 1310 may be a control device. A processing core may comprise, for example, a Cortex-A8 processing core manufactured by ARM Holdings, or a Steamroller processing core designed by Advanced Micro Devices Corporation. Processor 1310 may comprise at least one Qualcomm Snapdragon and/or Intel Atom processor. Processor 1310 may comprise at least one application-specific integrated circuit, ASIC. Processor 1310 may comprise at least one field-programmable gate array, FPGA. Processor 1310 may be means for performing method steps in device 1300. Processor 1310 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analogue and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as a mobile phone or a network node, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 1300 may comprise memory 1320. Memory 1320 may comprise random-access memory and/or permanent memory. Memory 1320 may comprise at least one RAM chip. Memory 1320 may comprise solid-state, magnetic, optical and/or holographic memory, for example. Memory 1320 may be at least in part accessible to processor 1313. Memory 1320 may be at least in part comprised in processor 1310. Memory 1320 may be means for storing information. Memory 1320 may comprise computer instructions that processor 1310 is configured to execute. When computer instructions configured to cause processor 1310 to perform certain actions are stored in memory 1320, and device 1300 overall is configured to run under the direction of processor 1310 using computer instructions from memory 1320, processor 1310 and/or its at least one processing core may be considered to be configured to perform said certain actions. Memory 1320 may be at least in part external to device 1300 but accessible to device 1300.

Device 1300 may comprise a transmitter 1330. Device 1300 may comprise a receiver 1340. Transmitter 1330 and receiver 1340 may be configured to transmit and receive, respectively, information in accordance with at least one cellular or non-cellular standard. Transmitter 1330 may comprise more than one transmitter. Receiver 1340 may comprise more than one receiver. Transmitter 1330 and/or receiver 1340 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 1300 may comprise a near-field communication, NFC, transceiver 1350. NFC transceiver 1350 may support at least one NFC technology, such as NFC, Bluetooth, Wibree or similar technologies.

Device 1300 may comprise user interface, UI, 1360. UI 1360 may comprise at least one of a display, a keyboard, a touchscreen, a vibrator arranged to signal to a user by causing device 1300 to vibrate, a speaker and a microphone. A user may be able to operate device 1300 via UI 1360, for example to accept incoming telephone calls, to originate telephone calls or video calls, to browse the Internet, to manage digital files stored in memory 1320 or on a cloud accessible via transmitter 1330 and receiver 1340, or via NFC transceiver 1350, and/or to play games.

Device 1300 may comprise or be arranged to accept a user identity module 1370. User identity module 1370 may comprise, for example, a subscriber identity module, SIM, card installable in device 1300. A user identity module 1370 may comprise information identifying a subscription of a user of device 1300. A user identity module 1370 may comprise cryptographic information usable to verify the identity of a user of device 1300 and/or to facilitate encryption of communicated information and billing of the user of device 1300 for communication effected via device 1300.

Processor 1310 may be furnished with a transmitter arranged to output information from processor 1310, via electrical leads internal to device 1300, to other devices comprised in device 1300. Such a transmitter may comprise a serial bus transmitter arranged to, for example, output information via at least one electrical lead to memory 1320 for storage therein. Alternatively, to a serial bus, the transmitter may comprise a parallel bus transmitter. Likewise, processor 1310 may comprise a receiver arranged to receive information in processor 1310, via electrical leads internal to device 1300, from other devices comprised in device 1300. Such a receiver may comprise a serial bus receiver arranged to, for example, receive information via at least one electrical lead from receiver 1340 for processing in processor 1310. Alternatively, to a serial bus, the receiver may comprise a parallel bus receiver.

Processor 1310, memory 1320, transmitter 1330, receiver 1340, NFC transceiver 1350, UI 1360 and/or user identity module 1370 may be interconnected by electrical leads internal to device 1300 in a multitude of different ways. For example, each of the aforementioned devices may be separately connected to a master bus internal to device 1300, to allow for the devices to exchange information. However, as the skilled person will appreciate, this is only one example and depending on the embodiment various ways of interconnecting at least two of the aforementioned devices may be selected.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above-described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. A first user equipment, UE, comprising:
means for identifying that the first UE is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device;
means for identifying a second UE that is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device;
means for establishing a sidelink connection between the first UE and the second UE;
means for identifying that the first UE has been selected to provide a synchronization signal for synchronizing the first UE and the second UE; and
means for transmitting, in response to identifying that the first UE has been selected to provide a synchronization signal for synchronizing the first UE and the second UE, the synchronization signal to the second UE via the sidelink connection.

2. The first UE of claim 1, wherein the means for identifying that the first UE has been selected to provide the synchronization signal comprises:
means for receiving from a location management function, LMF, an indication that the first UE is to provide the synchronization signal.

3. The first UE of claim 1, wherein the means for identifying that the first UE has been selected to provide the synchronization signal comprises:
means for receiving an indication, from the second UE, that the first UE has been selected as a primary reference device in the sidelink connection and that the second UE has been selected as a secondary reference device in the sidelink connection.

4. A first user equipment, UE, comprising:
means for identifying that the first UE is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device;
means for identifying a second UE that is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device;
means for establishing a sidelink connection between the first UE and the second UE; and
means for receiving a synchronization signal from the second UE via the sidelink connection, wherein the synchronization signal is for synchronizing the first UE and the second UE.

5. The first UE of any preceding claim, further comprising:
means for determining whether the first UE and the second UE are associated with the same network node;
means for determining whether the first UE and/or second UE are connected to the network node; and
means for, upon determining that the first UE and second UE are not associated with the same network node or that at least one of the first UE and second UE are not connected to the network node, establishing the sidelink connection between the first UE and the second UE to synchronize the first UE and the second UE.

6. The first UE of any preceding claim, wherein the first UE or second UE comprises an activator suitable for activating the AIoT device or a reader suitable for receiving at least one signal from an activated AIoT device.

7. The first UE of claim 6, wherein the first UE is an activator among a plurality of activators, each of the plurality being configured to send an indication of its respective availability for activating the AIoT device; wherein a primary activator is selected from the plurality of activators based on the indications, wherein the primary activator denotes the first activator that will try to activate the AIoT device; and the plurality of activators are informed of the selected primary activator.

8. The first UE of claim 7, wherein the first UE is selected to be the primary activator.

9. The first UE of claim 6, wherein the first UE is an activator among a plurality of activators, each activator of the plurality having a unique activation signal configuration, wherein the respective unique activation configurations are configured to be transmitted by the activators to activate the AIoT device.

10. The first UE of any preceding claim, wherein:
the synchronization signal comprises a time, T₀, for use by the first UE and the second UE, wherein T₀ is a time for commencing a time difference of arrival localization session to locate the AIoT device.

11. The first UE of any preceding claim, wherein the means comprise: at least one processor; and at least one memory storing instructions that, when executed by the at least once processor, cause the performance of the apparatus.

12. A method, comprising:
identifying that a first user equipment, UE, is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device;
identifying a second UE that is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device;
establishing a sidelink connection between the first UE and the second UE;
identifying that the first UE has been selected to provide a synchronization signal for synchronizing the first UE and the second UE; and
transmitting, in response to identifying that the first UE has been selected to provide a synchronization signal for synchronizing the first UE and the second UE, the synchronization signal to the second UE via the sidelink connection.

13. A method, comprising:
identifying that a first user equipment, UE, is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device;
identifying a second UE that is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device; and
establishing a sidelink connection between the first UE and the second UE;
receiving a synchronization signal from the second UE via the sidelink connection, wherein the synchronization signal is for synchronizing the first UE and the second UE.

14. A computer program comprising instructions which, when executed by an apparatus, cause the apparatus to:
identify that a first user equipment, UE, is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device;
identify a second UE that is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device;
establish a sidelink connection between the first UE and the second UE;
identify that the first UE has been selected to provide a synchronization signal for synchronizing the first UE and the second UE; and
transmit, in response to identifying that the first UE has been selected to provide a synchronization signal for synchronizing the first UE and the second UE, the synchronization signal to the second UE via the sidelink connection.

15. A computer program comprising instructions which, when executed by an apparatus, cause the apparatus to:
identify that a first user equipment, UE, is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device;
identify a second UE that is to perform either: a transmission of an activation signal to an ambient internet of things, AIoT, device as part of a procedure for determining a position of the AIoT device; or a receiving of a response to an activation signal from the AIoT device as part of a procedure for determining a position of the AIoT device; and
establish a sidelink connection between the first UE and the second UE;
receive a synchronization signal from the second UE via the sidelink connection, wherein the synchronization signal is for synchronizing the first UE and the second UE.
